(19) Europäisches Patentamt
European Patent Office
Office européen des brevets

(11) EP 0 896 012 A2

(12) EUROPEAN PATENT APPLICATION

(43) Date of publication:
10.02.1999 Bulletin 1999/06

(51) Int. Cl.[6]: C08G 63/553, C08L 67/06, C08F 283/01

(21) Application number: 98113949.6

(22) Date of filing: 24.07.1998

(84) Designated Contracting States:
AT BE CH CY DE DK ES FI FR GB GR IE IT LI LU MC NL PT SE
Designated Extension States:
AL LT LV MK RO SI

(30) Priority: 08.08.1997 JP 215178/97

(71) Applicant:
Nippon Shokubai Co., Ltd.
Osaka-shi, Osaka 541-0043 (JP)

(72) Inventors:
- Mori, Takehiro
  Suita-shi, Osaka, 564-0035 (JP)
- Watanabe, Takako
  Ukyo-ku, Kyoto, 615-0846 (JP)
- Tanaka, Shozo
  Osaka-shi, Osaka, 534-0016 (JP)

(74) Representative:
Petruzziello, Aldo et al
Racheli & C. s.r.l.
Viale San Michele del Carso, 4
20144 Milano (IT)

# (54) Molding material

(57) A molding material is composed of unsaturated polyester produced using dicyclopentadiene (DCP) and peroxy ester, in which tertiary alkyl group having more than four carbon atoms bonds to a peroxide group. Let $A_i$ (i=1, 2, • • •, n, where n is a natural number) be one particular polybasic acid in all the polybasic acid components to be made into the unsaturated polyester, $m_i$ be a mole fraction of the polybasic acid denoted as $A_i$ in all the polybasic acid components, $N_i$ be the number of carboxyl groups contained in one molecule of the polybasic acid denoted as $A_i$ (here, $N_i$ is an integer greater than one, and in case of an anhydrous acid, the number $N_i$ is counted on the assumption that the anhydrous acid is converted into a hydrous acid), and X be the number of moles of DCP, then the number X of moles of DCP with respect to 1 mol of carboxyl groups in all the polybasic acid components satisfies Inequality (1):

$$0.2/\sum_{i=1}^{n}(N_i \times m_i) \le x \le [\sum_{i=1}^{n}(N_i \times m_i)-1]/\sum_{i=1}^{n}(N_i \times m_i) \quad .....(1)$$

where

$$\sum_{i=1}^{n} m_i = 1 .$$

Consequently, it has become possible to provide a molding material, from which a molded article having excellent molding property and good gloss on its surface but no inconsistencies in color can be obtained even when a low profile additive and a coloring agent are added, for example.

EP 0 896 012 A2

## Description

FIELD OF THE INVENTION

The present invention relates to a molding material containing unsaturated polyester produced using dicyclopentadiene.

BACKGROUND OF THE INVENTION

A sheet molding compound (SMC) has been known as a molding material containing unsaturated polyester. However, the SMC shrinks when it is cured through the heat compression molding, which causes a crack or deformation of the resulting molded article. To solve this problem, a low profile additive made of a thermoplastic polymer is generally added to the SMC, so that the shrinkage is suppressed as the thermoplastic polymer swells with the heating. Consequently, the occurrence of molding deficiencies is reduced.

However, the unsaturated polyester and low profile additive cause phase separation. Hence, if the low profile additive is used when a coloring agent is added to the SMC, the resulting molded article is not colored uniformly and has inconsistencies in color. This impairs the outward appearance of the molded article considerably. To solve this problem, Japanese Laid-open Patent Application No. 196650/1988 (*Tokukaisho No. 63-196650*) discloses an SMC, from which a molded article having excellent molding property and a beautiful outward appearance is obtained even when a coloring agent is added. In other words, the above publication discloses a molding material using, as the low profile additive, a thermoplastic copolymer having both compatibility and incompatibility with the unsaturated polyester. Also, Japanese Laid-open Patent Application No. 67387/1975 (*Tokukaisho No. 50-67387*) discloses a molding material using, as the low profile additive, a thermoplastic copolymer to which a functional group having excellent compatibility with the unsaturated polyester is introduced to its end terminal. Moreover, Japanese Laid-open Patent Application No. 64858/1987 (*Tokukaisho No. 62-64858*) discloses a molding material using, as the low profile additive, a three-dimensional low crosslinked polymer having a relatively high homogeneous dispersibility. However, these low profile additives used for the molding materials in the above disclosures are rather special (non-typical). Thus, there is an inconvenience that these molding materials become relatively expensive.

To eliminate the above inconvenience, a molding material containing unsaturated polyester produced using dicyclopentadiene has been proposed recently. From this molding material, a molded article having excellent molding property and water resistance but no inconsistencies in color can be obtained even when the low profile additive and coloring agent are added.

Generally, the molded articles used as house construction members, for example, water-flushing utilities, such as a bath and a wash-stand, must have a satisfactory (beautiful) outward appearance besides excellent physical properties, such as mechanical strength. A molded article obtained from the conventional molding material containing the unsaturated polyester produced using dicyclopentadiene has excellent water resistance and no inconsistencies in color, but there still remains a problem that the gloss on its surface is not satisfactory. When the gloss on the surface is unsatisfactory, so is the outward appearance, and hence, the molded article can not be used suitably as the house construction members, for example.

SUMMARY OF THE INVENTION

It is therefore an object of the present invention to provide a relatively inexpensive molding material, from which a molded article having excellent molding property and good gloss on its surface but no inconsistencies in color, in short, a beautiful outward appearance, or to be more specific, a molded article which can be suitably used as house construction members, for example, water-flushing utilities, such as a bath and a wash-stand, can be obtained even when the low profile additive and coloring agent are added.

To achieve the above object, the inventors of the present invention conducted assiduous study on the molding material containing unsaturated polyester produced using dicyclopentadiene. In due course, the inventors achieved the present invention when they discovered that a molded article having excellent molding property and good gloss on its surface but no inconsistencies in color, in short, a molded article having a beautiful outward appearance, or to be more specific, a molded article which can be suitably used as house construction members, for example, water-flushing utilities, such as a bath and a wash-stand, can be obtained from a molding material containing unsaturated polyester produced using dicyclopentadiene, more specifically, from a molding material containing (1) unsaturated polyester made from polybasic acid components using dicyclopentadiene in such a manner to satisfy a particular inequality, and (2) peroxy ester having a particular structure as a curing agent, even when the low profile additive and coloring agent are added to the molding material.

To be more specific, to achieve the above and other objects, the molding material of the present invention is

unsaturated polyester produced using dicyclopentadiene,

characterized in that, let $A_i$ (i=1, 2, • • •, n, where n is a natural number) be one particular polybasic acid in all the polybasic acid components to be made into the unsaturated polyester, $m_i$ be a mole fraction of the polybasic acid denoted as $A_i$ in all the polybasic acid components, $N_i$ be the number of carboxyl groups contained in one molecule of the polybasic acid denoted as $A_i$ (here, $N_i$ is an integer greater than one, and in case of an anhydrous acid, the number $N_i$ is counted on the assumption that the anhydrous acid is converted into a hydrous acid), and X be the number of moles of dicyclopentadiene, then the number X of moles of dicyclopentadiene with respect to 1 mol of carboxyl groups in all the polybasic acid components satisfies Inequality (1):

$$0.2/\sum_{i=1}^{n}(N_i \times m_i) \leq x \leq [\sum_{i=1}^{n}(N_i \times m_i)-1]/\sum_{i=1}^{n}(N_i \times m_i) \; .....(1)$$

where

$$\sum_{i=1}^{n} m_i = 1 \, ,$$

and

characterized by containing peroxy ester, in which a tertiary alkyl group having more than 4 carbon atoms bonds to a peroxide group.

According to the above arrangement, it has become possible to provide a relatively inexpensive molding material, from which a molded article having excellent molding property and good gloss on its surface but no inconsistencies in color, in short, a molded article having a beautiful outward appearance, or to be more specific, a molded article suitably used as house construction members, for example, water-flushing utilities, such as a bath and a wash-stand, can be obtained even when the low profile additive and coloring agent are added.

Dicyclopentadiene is a relatively inexpensive compound. Moreover, according to the above arrangement, it has become possible to omit special (non-typical) low profile additives indispensable for the conventional molding materials, such as the thermoplastic polymer having a carboxyl group at the end terminal disclosed in Japanese Laid-open Patent Application No. 67387/1975 (*Tokukaisho No. 50-67387*), the three-dimensional low crosslinked polystyrene disclosed in Japanese Laid-open Patent Application No. 64858/1987 (*Tokukaisho No. 62-64858*), and the block copolymer of styrene and vinyl acetate disclosed in Japanese Laid-open Patent Application No. 196650/1988 (*Tokukaisho No. 63-196650*). Consequently, a relatively inexpensive molding material which can attain the above-explained various effects can be provided.

Further objects, features, advantages of the present invention will be fully understood by the following description. Also, the benefits of the present invention will be apparent from the following explanation.

## DESCRIPTION OF THE EMBODIMENTS

A molding material of the present invention is unsaturated polyester produced using dicyclopentadiene. More specifically, the molding material is composed of unsaturated polyester made from polybasic acid components using dicyclopentadiene in such a manner to satisfy a specific inequality, and peroxy ester having a specific structure as a curing agent.

The unsaturated polyester used in the present invention can be made using the polybasic acid components, an alcohol component, and dicyclopentadiene as raw materials.

The polybasic acid components are made of at least one kind of polybasic acid. Examples of the polybasic acid include:

unsaturated dibasic acids, such as maleic acid, maleic anhydride, fumaric acid, itaconic acid, itaconic anhydride, mesaconic acid, citraconic acid, and citraconic anhydride;

saturated dibasic acids, such as phthalic acid, phthalic anhydride, tetrahydrophthalic acid, tetrahydrophtalic anhydride, isophthalic acid, terephthalic acid, adipic acid, sebacis acid, and HET acid.

polybasic acids having more than two functional groups, such as trimellitic acid, trimellitic anhydride, pyromellitic acid, and pyromellitic dianhydride; etc. One member or a mixture of two or more members selected from these example polybasic acids can be used effectively. It is preferable that a mole ratio of the unsaturated polybasic

acid(s) to all the polybasic acid components is 70% or above.

The alcohol component is made of at least one kind of alcohol. Examples of alcohol include:

glycols, such as ethylene glycol, propylene glycol, diethylene glycol, dipropylene glycol, neopentyl glycol, butanediol, hexanediol, and bisphenol hydride;
alcohols having more than two functional groups, such as glycerol, trimethylol propane, and pentaerythritol;
epoxides, such as ethyleneoxide and propyleneoxide; etc.

One member or a mixture of two or more members selected from these example alcohols can be used effectively.

A used amount of dicyclopentadiene is set in such a manner that a relation with all the polybasic acid components satisfies Inequality (1) above. More specifically, let $A_i$ (i=1, 2, • • •, n, where n is a natural number) be one particular polybasic acid in all the polybasic acid components to be made into the unsaturated polyester, $m_i$ be a mole fraction of the polybasic acid denoted as $A_i$ in all the polybasic acid components, $N_i$ be the number of carboxyl groups contained in one molecule of the polybasic acid denoted as $A_i$ (here, $N_i$ is an integer greater than one, and in case of an anhydrous acid, the number $N_i$ is counted on the assumption that the anhydrous acid is converted into a hydrous acid), and X be the number of moles of dicyclopentadiene, then a used amount of dicyclopentadiene is set in such a manner that the number X of moles of dicyclopentadiene with respect to 1 mol of carboxyl groups in all the polybasic acid components satisfies Inequality (1) above. More preferably, a used amount of dicyclopentadiene is set in such a manner that the number X of moles satisfies Inequality (1a):

$$0.35/\sum_{i=1}^{n}(N_i \times m_i) \leq x \leq 0.65/\sum_{i=1}^{n}(N_i \times m_i) \;.....(1a)$$

where

$$\sum_{i=1}^{n} m_i = 1.$$

Most preferably, a used amount of dicyclopentadiene is set in such a manner that the number X of moles satisfies Inequality (1b):

$$0.42/\sum_{i=1}^{n}(N_i \times m_i) \leq x \leq 0.65/\sum_{i=1}^{n}(N_i \times m_i) \;.....(1b)$$

where

$$\sum_{i=1}^{n} m_i = 1.$$

For further understanding, a detailed explanation of Inequality (1) will be given in the following using an example case where all the polybasic acid components to be made into the unsaturated polyester are made of a maleic anhydride and a trimellitic anhydride in a mole ratio of 3:1. Let the maleic anhydride be a polybasic acid $A_1$ and the trimellitic anhydride be a polybasic acid $A_2$, then $m_1$=0.75, $N_1$=2, $m_2$=0.25, and $N_2$=3. Thus, Inequality (1) is written as:

$$0.2/(2\times0.75+3\times0.25) \leq X \leq [(2\times0.75+3\times0.25)-1]/(2\times0.75+3+0.25),$$

hence, when rounded off to the third decimal place, we get: 0.09≤X≤0.56. Thus, the number X of moles of dicyclopentadiene with respect to 1 mol of carboxyl groups in all the polybasic acid components only has be set to a range

between 0.09 mol and 0.56 mol inclusive. More specifically, in case that all the polybasic acid components are made of 3 mol of the maleic anhydride and 1 mol of the trimellitic anhydride, 9 mol of carboxyl groups are contained in all the polybasic acid components. Thus, a used amount of dicyclopentadiene is set to a range between 0.81 mol and 5.0 mol inclusive.

In case that the number X of moles of dicyclopentadiene is smaller than the range specified by Inequality (1) above, that is, when a used amount of dicyclopentadiene is too small, the effect of producing the unsaturated polyester using dicyclopentadiene is hardly attained. Thus, the resulting unsaturated polyester can not be used for a suitable molding material to obtain a molded article having excellent molding property and a beautiful outward appearance even when the low profile additive and coloring agent are added. In case that the number X of moles is greater than the range specified by Inequality (1) above, that is, when a used amount of dicyclopentadiene is too large, a great amount of condensed products (polymers) of low molecular weight are produced when synthesizing the unsaturated polyester. Thus, a great amount of thickener has to be used when producing a molding material. Further, a molded article made from the molding material thus obtained has poor physical properties, such as mechanical strength. Furthermore, a liner expansion coefficient increases as a glass transition point (Tg) of the molded article drops, and this causes the molded article to shrink when cured through the heat compression molding. Consequently, not only the resulting molded article has a crack or deformation, but also the smoothness of the surface is impaired considerably.

A producing method of the unsaturated polyester of the present invention is not especially limited. For example, the unsaturated polyester can be produced in any of the following methods:

a method disclosed in Japanese Examined Patent Publication No. 5931/1987 (*Tokukousho No. 62-5931*), wherein dicyclopentadiene malate, obtained through an addition reaction of maleic acid and dicyclopentadiene, is mixed with a polybasic acid component and an alcohol component to let the resulting mixture undergo a condensation reaction;

a method of mixing an addition product obtained through an addition reaction of an alcohol component and dicyclopentadiene with a polybasic acid component and an alcohol component to let the resulting mixture undergo a condensation reaction;

a method disclosed in Japanese Laid-open Patent Application No. 221408/1989 (*Tokukaihei No. 1-221408*), wherein all the polybasic acid components to be made into the unsaturated polyester, dicyclopentadiene, and an alcohol component are charged simultaneously to let the resulting mixture undergo addition and condensation reactions;

a method of letting all the polybasic acid components and an alcohol component to be made into the unsaturated polyester undergo a condensation reaction, during or after which dicyclopentadiene is mixed to trigger an addition reaction; etc.

Reaction conditions, such as a reaction temperature and reaction time, can be set adequately depending on the kinds or a combination of all the polybasic acid components and the alcohol component to be made into the unsaturated polyester, an amount (ratio) of used dicyclopentadiene, desired physical properties of the resulting molding material, etc.

Of all the above example methods, a preferred method is a method, wherein either an entire or a part of all the polybasic acid components, which contain maleic acid (anhydride) and will be made into the unsaturated polyester, is let undergo an addition reaction with dicyclopentadiene, then the resulting reaction mixture containing dicyclopentadiene malate is mixed with unreacted polybasic acid components among all the polybasic acid components and an alcohol component, and the resulting mixture is let undergo a condensation reaction. A particularly preferred method is a method, wherein a part of maleic acid (anhydride) is let undergo an addition reaction with dicyclopentadiene, and dicyclopentadiene malate obtained as a result is mixed with unreacted maleic acid (anhydride) and an alcohol component, and the resulting mixture is let undergo a condensation reaction. Further, it is preferable that the addition reaction takes place in the presence of water, and more preferably, under an inert gas atmosphere, such as a nitrogen gas atmosphere. How far the addition reaction has proceeded can be confirmed by measuring acid values of the reaction mixture.

In the condensation reaction, the reaction mixture obtained by the addition reaction may be mixed with an alcohol component for a further reaction. Alternatively, the reaction mixture obtained by the addition reaction may be mixed with an alcohol component and unreacted polybasic acid components among all the polybasic acid components for further reaction. In addition, it is preferable that the condensation reaction takes place under an inert gas atmosphere, such as a nitrogen gas atmosphere. How far the condensation reaction has proceeded can be confirmed by measuring acid values and viscosity of the condensed product.

A molding material can be produced using a mixture of conventional unsaturated polyester and the above-arranged unsaturated polyester, that is, using both the conventional unsaturated polyester (having poor coloring property) and the above-arranged unsaturated polyester. In this case, a ratio of the above-arranged unsaturated polyester in the mixture (unsaturated polyester used as a molding material) is preferably 10wt% or above, and more preferably

30wt% or above. The above arrangement makes it possible to provide a molding material, from which a molded article having excellent molding property and good gloss on its surface but no inconsistencies in color is obtained even when the low profile additive and coloring agent are added.

The molding material of the present invention includes, as a curing agent, peroxy ester in which a tertiary alkyl group having more than 4 carbon atoms bonds to a peroxide group. Peroxy ester is a peroxide having a structure expressed by General Formula (A):

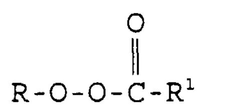 ..... (A)

where R represents a tertiary alkyl group having more than 4 carbon atoms and $R^1$ represents an organic residue, and more preferably, a peroxide having a structure expressed by General Formula (B):

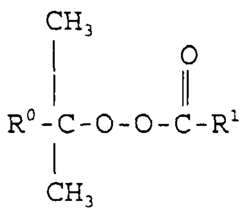 ..... (B)

where $R^0$ represents an alkyl group having more than one carbon atom and $R^1$ represents an organic residue. Examples of the organic residue denoted as $R^1$ include, but not limited to: an alkyl group, an alkoxy group, a cyclohexyl group, a cyclohexenyl group, a phenyl group, a phenoxy group, etc. For example, a phenyl group or a phenoxy group may further include a substituent group, such as an alkyl group. It is preferable that an alkyl group denoted as $R^0$ has 2-6 carbon atoms, and it is more preferable that such an alkyl group is a straight-chain or branched-chain group. It is particularly preferable that peroxy ester is a peroxide whose organic residue denoted as $R^1$ is a phenyl group, namely, peroxy benzoate.

A 10-hour half-life temperature of peroxy ester is approximately 70-120°C. Examples of peroxy ester include, but not limited to: t-amylperoxy benzoate, t-hexylperoxy benzoate, t-hexylperoxy monoisopropyl carbonate, t-amylperoxy-3,5,5-trimethylhexanoate, t-hexylperoxy-3,5,5,-trimethylhexanoate, etc. One member or a mixture of two or more members selected from these example peroxy esters can be used effectively. Of all these example peroxy esters, t-amylperoxy benzoate and t-hexylperoxy benzoate are particularly preferred.

An added amount of peroxy ester with respect to the above-arranged unsaturated polyester is not especially limited, and can be set adequately depending on the kinds of the unsaturated polyester or an ethylenic monomer which will be described below and other factors. However, a range between 0.05 part by weight and 10 parts by weight with respect to 100 parts by weight of the unsaturated polyester is preferable. In case that an added amount of peroxy ester is smaller or greater than the above-specified range, it may not be possible to obtain a molding material, from which a molded article having good gloss on its surface can be obtained.

Further, a molding material can be produced using a mixture of a conventional curing agent and the above-arranged peroxy ester, that is, using both the conventional curing agent and the above-arranged peroxy ester. In this case, a ratio of peroxy ester in the mixture is preferably 30wt% or above. Consequently, it has become possible to provide a molding material, from which a molded article having excellent molding property and good gloss on its surface but no inconsistencies in color can be obtained even when the low profile additive and coloring agent are added, for example.

The molding material of the present invention may optionally include a monomer having a polymerizable ethylenic double bond (hereinafter, referred to simply as ethylenic monomer), a reinforcing material, a supplemental material (adduct), etc. Examples of the supplemental material include: the low profile additive, a filling agent, the coloring agent, a polymerization inhibitor, a mold releasing agent, the thickener, a thinner, a polymerization conditioner, a viscosity conditioner, etc. The molding material of the present invention is suitably used as a sheet molding compound (SMC) and a bulk molding compound (BMC).

Examples of the ethylenic monomer possibly used in the present invention include, but not limited to: methyl methacrylate, vinyl acetate, trimethylol propane trimethacrylate, styrene, vinyl toluene, diarylphthalate, etc. One member or a mixture of two or more members selected from these example ethylenic monomers can be used effectively. Of

all these example ethylenic monomers, styrene is particularly preferable. An added amount of ethylenic monomer is not especially limited, but a range between 10 parts by weight and 180 parts by weight with respect to 100 parts by weight of the unsaturated polyester is preferable.

Examples of the reinforcing material possibly used in the present invention include glass fibers and the like, and are not especially limited. An added amount of reinforcing material is not especially limited, either. For example, an added amount, a fiber length, a fiber diameter, the number of fibers in a bundle of the glass fibers can be set adequately depending on the molding conditions of the molding material or the intended use of the molded article. For example, an added amount of the glass fibers is preferably in a range between 10wt% and 35wt% based on a total weight of the molding material.

Examples of the low profile additive possibly used in the present invention include, but not limited to:

thermoplastic polymers or thermoplastic copolymers, such as polystyrene, polymethyl methacrylate, polyethylene, polypropylene, saturated polyester, polyamide, and polyurethane;
three-dimentional low crosslinked polymer; etc. One member of a mixture of two or more members of these example low profile additives can be used effectively.

An added amount of low profile additive (in solid) is preferably in a range between 3 parts by weight and 100 parts by weight with respect to 100 parts by weight of the above-arranged unsaturated polyester. Further, in case that a weight average molecular weight of the low profile additive is smaller than 50,000, an added amount of the low profile additive is preferably in a range between 10 parts by weight and 100 parts by weight. In case that a weight average molecular weight of the low profile additive is 50,000 or greater, an added amount of the low profile additive is preferably in a range between 3 parts by weight and 60 parts by weight. When an added amount is smaller than the above-specified range, the resulting molding material shrinks considerably when cured through the heat compression molding. Thus, not only the resulting molded article has a crack or deformation like warpage, but also its surface loses the smoothness. When an added amount of the low profile additive is greater than the above-specified range, the low profile additive agglomerates while the resulting molding material is cured through the heat compression molding. Thus, the gloss on the resulting molded article is impaired.

Examples of the filling agent possibly used in the present invention include, but not limited to: calcium carbonate, aluminium hydroxide, clay, talc, silica, etc. One member of a mixture of two or more members selected from these example filling agents can be used effectively. An added amount of filling agent is not especially limited, and can be set adequately depending on the molding conditions of the molding material, or the intended use of the molded article. However, a preferable range is between 50 parts by weight and 300 parts by weight with respect to 100 parts by weight of the unsaturated polyester. If an adequate kind of filling agent is selected, the resulting molded article can be transparent.

The coloring agent possibly used in the present invention is not especially limited, and can be any of various kinds of coloring agents conventionally used for the unsaturated polyester. An added amount of coloring agent is not especially limited, and can be set adequately depending on the intended use of the molded article, etc.

Examples of the polymerization inhibitor possibly used in the present invention include, but not limited to: 1,4-benzoquinone (p-quinone), hydroquinone, t-butylhydroquinone, t-butyl catechol, etc. One member or a mixture of two or more members selected from these example polymerization inhibitors can be used effectively. An added amount of polymerization inhibitor is not especially limited.

Examples of the mold releasing agent possibly used in the present invention include, but not limited to: fatty acid, such as stearic acid and lauric acid, and metal salts thereof, etc. One member or a mixture of two or more members selected from these example mold releasing agents can be used effectively. An added amount of mold releasing agent is not especially limited, and can be set depending on the kinds of the mold releasing agents or the molding conditions of the molding material.

The thickener possibly used in the present invention can be any compound reactive with polybasic acid and/or alcohol, and examples of which include:

polyfunctional isocyanate;
polyvalent metal oxide, such as magnesium oxide, calcium oxide, and zinc oxide;
polyvalent metal hydroxide, such as magnesium hydroxide, calcium hydroxide, and aluminium hydroxide; etc.

One member or a mixture of two or more members selected from these example thickeners can be used effectively. Of all these example thickeners, polyvalent metal oxide and polyvalent metal hydroxide are preferable than the others; alkali earth metal oxide and alkali earth metal hydroxide are further preferable, and magnesium oxide and calcium hydroxide are most preferable. A used amount of the thickener is not especially limited, and can be set adequately depending on the weight average molecular weight and viscosity of the unsaturated polyester and the like. Instead of

increasing viscosity chemically using the thickener, the viscosity can be increased physically using a polymer that crystallizes at room temperature, for example. Further, the viscosity can be increased both chemically and physically.

Generally, if the weight average molecular weight of the unsaturated polyester is 7,000 or greater, satisfactory viscosity can be obtained using polyvalent metal oxide and/or polyvalent metal hydroxide. Thus, the unsaturated polyester and filling agent will never be separated while the viscosity is increased. Also, since the viscosity can be increased in a satisfactory manner, a mold releasing film used for wrapping the molding material can be separated fairly well. Thus, the molding material can be handled easily when being molded. Further, when the viscosity is increased using polyvalent metal oxide and/or polyvalent metal hydroxide, the resulting molding material has satisfactory fluidity, and hence excellent molding property, thereby preventing molding or filling deficiencies.

The thinner, polymerization conditioner, and viscosity conditioner possibly used in the present invention are not especially limited, and any kind of those conventionally used for the unsaturated polyester can be used.

When the molding material is the SMC, the producing method of the molding material of the present invention is preferably a method of adding peroxy ester to unsaturated polyester while mixing peroxy ester with the low profile additive, thickener, ethylenic monomer, and supplemental material, and then impregnating the reinforcing material with the mixture. When the molding material is the BMC, a preferable method is a method of adding the low profile additive, ethylenic monomer, thickener, reinforcing material, and supplemental material to peroxy ester in addition to the unsaturated polyester.

Dicyclopentadiene is a relatively inexpensive compound. Moreover, according to the above arrangement, special (non-typical) low profile additives, which are indispensable in the conventional molding materials and disclosed in Japanese Laid-open Patent Application Nos. 67387/1975, 64858/1987, and 196650/1988 (*Tokukaisho Nos. 50-67387, 62-64858*, and *63-196650*, respectively), can be omitted. Further, it has become possible to provide a relatively inexpensive molding material, from which a molded article having excellent molding property and good gloss on its surface but no inconsistencies in color, in short, a molded article having a beautiful outward appearance, can be obtained even when a typical low profile additive and a coloring agent are added.

Since a molded article made from the molding material has water resistance and hot water resistance, it can be suitably used as house construction members, for example, water-flushing utilities, such as a bath and a washstand. Here, a molding method and molding conditions of the molding material are not especially limited.

In the following, the present invention will be explained in detail by way of examples and comparative examples. However, the present invention is not limited to the disclosure below. In the following examples and comparative examples, "part(s)" means "part(s) by weight" and "%" means "percent by weight" unless otherwise specified.

<u>Example 1</u>

A flask equipped with a thermometer, a nitrogen gas conduit, a reflux condenser, and a stirrer is used as a reaction vessel, and 2.2 mol of maleic anhydride, 2.0 mol of dicyclopentadiene, and 2.0 mol of water are charged to the reaction vessel.

Then, the content is let undergo a reaction (addition reaction) at temperatures ranging from 100°C to 125°C with stirring under a nitrogen gas atmosphere, while an acid value of a reaction product is measured occasionally by the neutralization titration method. When the acid value reaches 260mgKOH/g-265mgKOH/g, the reaction product is mixed with 1.8 mol of maleic anhydride, 2.5 mol of propylene glycol, 0.05 mol of trimethylol propane, and 0.5 mol of neopentyl glycol. Then, the resulting mixture is let undergo reaction (condensation reaction) for seven hours at 200°C with stirring under a nitrogen gas atmosphere.

Consequently, unsaturated polyester of the present invention is obtained. An acid value of the unsaturated polyester is 25.5mgKOH/g. In the present example, the number X of moles of dicyclopentadiene with respect to 1 mol of carboxyl groups in the maleic anhydride is preferably in a range between 0.1 mol and 0.5 mol inclusive. The number X of moles set in the reaction conditions is 0.25 mol.

Then, a predetermined amount of styrene serving as the ethylenic monomer is added to the unsaturated polyester, after which hydroquinone serving as the polymerization inhibitor is added in such an amount to attain a concentration of 100ppm with respect to a total amount, and the resulting reaction product is mixed homogeneously. Consequently, a resin composition (UP-1) made of 60% of solid (unsaturated polyester) and 40% of styrene is prepared. The major reaction conditions and results are set forth in Table 1 below.

Then, 1.0 part of magnesium oxide serving as the thickener, 1.0 part of t-hexylperoxy benzoate (hereinafter, referred to as t-HPB) serving as peroxy ester (curing agent), 150.0 parts of calcium carbonate serving as the filling agent, 30.0 parts of a polystyrene solution and 5.0 parts of polyethylene powders both serving as the low profile additive, 5.0 parts of the coloring agent, 0.05 part of 1,4-benzoquinone serving as the polymerization inhibitor, and 5.0 parts of zinc stearate serving as the mold releasing agent are added to and blended with 70.0 parts of the resin composition (UP-1). The polystyrene solution is a mixture of 30% of polystyrene and 70% of styrene.

The resulting compound is impregnated into glass fibers (reinforcing material) of 1-inch long, and made into a

sheet, whereby an SMC is produced as the molding material of the present invention. A ratio of the glass fibers contained in the SMC is 20%.

The SMC is subjected to the heat compression molding under the following molding conditions. That is, a mold having a cavity of 300mm × 300mm is used, and a temperature of the upper mold (the surface having thereon the pattern) is raised to 145°C, and a temperature of the lower mold (the rear surface) is raised to 130°C. Then, 700g of the SMC is filled in the cavity, and subjected to the heat compression molding for a predetermined time at a pressure of 7MPa, whereby a plate (molded article) of 300mm × 300mm is produced.

The consistencies in color, that is, the coloring property, of the plate thus obtained are evaluated visually. Also, the gloss on the surface of the plate is evaluated visually. Then, no inconsistencies in color are acknowledged and the gloss on the surface is satisfactory, in other words, the plate has a beautiful outward appearance.

The major producing conditions and results are set forth in Table 2 below. In Table 2, in the coloring property row, a mark "◎" is placed when the plate has a satisfactory outward appearance and no inconsistencies in color are acknowledged; a mark "○" is placed when the inconsistencies in color are acknowledged but substantially negligible; and a mark "X" is placed when the inconsistencies in color are acknowledged across the plate. In the gloss row, a mark "◎" is placed when the gloss on the surface is satisfactory; a mark "○" is placed when the deterioration of the gloss is substantially negligible; a mark "△" is placed when the gloss is slightly impaired; and a mark "X" is placed when the gloss is almost lost.

Example 2

A compound is obtained using 70.0 parts of the resin composition (UP-1) in the same manner as Example 1 above except that 1.0 part of t-amylperoxy benzoate (hereinafter, referred to as t-APB) is used as peroxy ester (curing agent) instead of 1.0 part of t-HPB. The resulting compound is made into a sheet in the same manner as Example 1, whereby an SMC is produced. A ratio of the glass fibers contained in the SMC is 20%.

A plate is produced by subjecting the SMC to the heat compression molding under the same molding conditions as Example 1 above. The coloring property and gloss of the plate thus obtained are evaluated in the same manner as Example 1 above. Then, no inconsistencies in color are acknowledged and the gloss on the surface is satisfactory, in other words, the plate has a beautiful outward appearance. The major producing conditions and results are set forth in Table 2 below.

Example 3

A compound is obtained using 70.0 parts of the resin composition (UP-1) in the same manner as Example 1 above except that 1.0 part of t-hexylperoxy monoisopropyl carbonate (hereinafter, referred to as t-HIPC) is used as peroxy ester (curing agent) instead of 1.0 part of t-HPB. The resulting compound is made into a sheet in the same manner as Example 1, whereby an SMC is produced. A ratio of the glass fibers contained in the SMC is 20%.

A plate is produced by subjecting the SMC to the heat compression molding under the same molding conditions as Example 1 above. The coloring property and gloss of the plate thus obtained are evaluated in the same manner as Example 1 above. Then, no inconsistencies in color are acknowledged and the gloss on the surface is substantially satisfactory, in other words, the plate has a beautiful outward appearance. The major producing conditions and results are set forth in Table 2 below.

Example 4

A compound is obtained using 70.0 parts of the resin composition (UP-1) in the same manner as Example 1 above except that 1.0 part of t-amylperoxy-3,5,5-trimethyl hexanoate (hereinafter, referred to as t-APMH) is used as peroxy ester (curing agent) instead of 1.0 part of t-HPB. The resulting compound is made into a sheet in the same manner as Example 1, whereby an SMC is produced. A ratio of the glass fibers contained in the SMC is 20%.

A plate is produced by subjecting the SMC to the heat compression molding under the same molding conditions as Example 1 above. The coloring property and gloss of the plate thus obtained are evaluated in the same manner as Example 1 above. Then, no inconsistencies in color are acknowledged and the gloss on the surface is substantially satisfactory, in other words, the plate has a beautiful outward appearance. The major producing conditions and results are set forth in Table 2 below.

Example 5

A compound is obtained using 70.0 parts of the resin composition (UP-1) in the same manner as Example 1 above except that 1.0 part of t-hexylperoxy-3,5,5-trimethyl hexanoate (hereinafter, referred to as t-HPMH) is used as

peroxy ester (curing agent) instead of 1.0 part of t-HPB. The resulting compound is made into a sheet in the same manner as Example 1, whereby an SMC is produced. A ratio of the glass fibers contained in the SMC is 20%.

A plate is produced by subjecting the SMC to the heat compression molding under the same molding conditions as Example 1 above. The coloring property and gloss of the plate thus obtained are evaluated in the same manner as Example 1 above. Then, no inconsistencies in color are acknowledged and the gloss on the surface is substantially satisfactory, in other words, the plate has a beautiful outward appearance. The major producing conditions and results are set forth in Table 2 below.

Example 6

Here, 2.2 mol of maleic anhydride, 2.0 mol of dicyclopentadiene, and 2.0 mol of water are charged to a reaction vessel of the same type as the one used in Example 1 above. Then, the content is let undergo reaction with stirring under a nitrogen gas atmosphere at temperatures ranging from 100°C to 125°C, while an acid value of the reaction product is measured occasionally. When the acid value reaches 260mgKOH/g-265mgKOH/g, 0.4 mol of maleic anhydride, 0.65 mol of propylene glycol, and 0.55 mol of trimethylol propane are mixed with the reaction product, after which the resulting mixture is let undergo reaction for 7.5 hours at 200°C with stirring under a nitrogen gas atmosphere.

Consequently, unsaturated polyester of the present invention is obtained. An acid value of the unsaturated polyester is 26.0mgKOH/g. In the present invention, a preferable number X of moles of dicyclopentadiene with respect to 1 mol of carboxyl groups in the maleic anhydride is in a range between 0.1 mol and 0.5 mol inclusive. Here, the number X of moles set under the above reaction conditions is 0.38 mol.

Then, after a predetermined amount of styrene is added to the unsaturated polyester, hydroquinone is added in such an amount to attain a concentration of 100ppm with respect to a total amount, and the resulting reaction product is mixed homogeneously. Consequently, a resin compound (UP-2) made of 60% of solid and 40% of styrene is prepared. The major reaction conditions and result are set forth in Table 1 below.

Then, a compound is obtained using 70.0 parts of the resin composition (UP-2) in the same manner as Example 1 above. Then, the resulting compound is made into a sheet in the same manner as Example 1, whereby an SMC is produced. A ratio of the glass fibers contained in the SMC is 20%.

A plate is produced by subjecting the SMC to the heat compression molding under the same molding conditions as Example 1 above. The coloring property and gloss of the plate thus obtained are evaluated in the same manner as Example 1 above. Then, no inconsistencies in color are acknowledged and the gloss on the surface is satisfactory, in other words, the plate has a beautiful outward appearance. The major conditions and results are set forth in Table 2 below.

Example 7

Here, 2.2 mol of maleic anhydride, 2.0 mol of dicyclopentadiene, and 2.0 mol of water are charged to a reaction vessel of the same type as the one used in Example 1 above. Then, the content is let undergo reaction with stirring under a nitrogen gas atmosphere at temperatures ranging from 100°C to 125°C, while an acid value of the reaction product is measured occasionally. When the acid value reaches 260mgKOH/g-265mgKOH/g, 2.8 mol of maleic anhydride, 3.55 mol of propylene glycol, and 0.5 mol of neopentyl glycol are mixed with the reaction product, after which the resulting mixture is let undergo reaction for 8 hours at 200°C with stirring under a nitrogen gas atmosphere.

Consequently, unsaturated polyester of the present invention is obtained. An acid value of the unsaturated polyester is 27.0mgKOH/g. In the present invention, a preferable number X of moles of dicyclopentadiene with respect to 1 mol of carboxyl groups in the maleic anhydride is in a range between 0.1 mol and 0.5 mol inclusive. Here, the mole number X set under the above reaction conditions is 0.20 mol.

Then, after a predetermined amount of styrene is added to the unsaturated polyester, hydroquinone is added in such an amount to attain a concentration of 100ppm with respect to a total amount, and the reaction product is mixed homogeneously. Consequently, a resin compound (UP-3) made of 60% of solid and 40% of styrene is prepared. The major reaction conditions and result are set forth in Table 1 below.

Then, a compound is obtained using 70.0 parts of the resin composition (UP-3) in the same manner as Example 1 above except that a used amount of magnesium oxide is increased to 1.5 part from 1.0 part. Then, the resulting compound is made into a sheet in the same manner as Example 1, whereby an SMC is produced. A ratio of the glass fibers contained in the SMC is 20%.

A plate is produced by subjecting the SMC to the heat compression molding under the same molding conditions as Example 1 above. The coloring property and gloss of the plate thus obtained are evaluated in the same manner as Example 1 above. Then, no inconsistencies in color are acknowledged and the gloss on the surface is satisfactory, in other words, the plate has a beautiful outward appearance. The major producing conditions and results are set forth in Table 3 below.

Example 8

A compound is obtained using 70.0 parts of the resin composition (UP-1) in the same manner as Example 1 above except that a mixture of 0.5 part of t-HPB, and 0.5 part of t-butylperoxy monoisopropyl carbonate (hereinafter, referred to as t-BIPC) serving as a conventional curing agent is used instead of 1.0 part of t-HPB. The resulting compound is made into a sheet in the same manner as Example 1 above, whereby an SMC is produced. A ratio of the glass fibers contained in the SMC is 20%.

A plate is produced by subjecting the SMC to the heat compression molding under the same molding conditions as Example 1 above. The coloring property and gloss of the plate thus obtained are evaluated in the same manner as Example 1 above. Then, no inconsistencies in color are acknowledged and the gloss on the surface is satisfactory, in other words, the plate has a beautiful outward appearance. The major producing conditions and results are set forth in Table 3 below.

Comparative Example 1

A compound is obtained using 70.0 parts of the resin composition (UP-1) in the same manner as Example 1 above except that 1.0 part of t-BIPC serving as a conventional curing agent is used instead of 1.0 part of t-HPB. The resulting compound is made into a sheet in the same manner as Example 1 above, whereby a comparative SMC is produced. A ratio of the glass fibers contained in the comparative SMC is 20%.

A comparative plate is produced by subjecting the comparative SMC to the heat compression molding under the same molding conditions as Example 1 above. The coloring property and gloss of the plate thus obtained are evaluated in the same manner as Example 1 above. Then, no inconsistencies in color are acknowledged on the plate, but the plate has substantially no gloss on its surface, in other words, its outward appearance is not beautiful. The major producing conditions and results are set forth in Table 3 below.

Comparative Example 2

A compound is obtained using 70.0 parts of the resin composition (UP-1) in the same manner as Example 1 above except that 1.0 part of t-butylperoxy benzoate (hereinafter, referred to as t-BPB) serving as a conventional curing agent is used instead of 1 part of HPB. The resulting compound is made into a sheet in the same manner as Example 1 above, whereby a comparative SMC is produced. A ratio of the glass fibers contained in

the comparative SMC is 20%. A comparative plate is produced by subjecting the comparative SMC to the heat compression molding under the same molding conditions as Example 1 above. The coloring property and gloss of the plate thus obtained are evaluated in the same manner as Example 1 above. Then, no inconsistencies in color are acknowledged on the plate, but the plate has substantially no gloss on its surface, in other words, its outward appearance is not beautiful. The major producing conditions and results are set forth in Table 3 below.

Comparative Example 3

A compound is obtained using 70.0 parts of the resin composition (UP-1) in the same manner as Example 1 above except that 1.0 part of t-butylperoxy laurate (hereinafter, referred to as t-BPL) serving as a conventional curing agent is used instead of 1 part of t-HPB. The resulting compound is made into a sheet in the same manner as Example 1, whereby a comparative SMC is produced. A ratio of the glass fibers contained in the comparative SMC is 20%.

A comparative plate is produced by subjecting the comparative SMC to the heat compression molding under the same molding conditions as Example 1 above. The coloring property and gloss of the plate thus obtained are evaluated in the same manner as Example 1 above. Then, no inconsistencies in color are acknowledged on the plate, but the plate has substantially no gloss on its surface, in other words, its outward appearance is not beautiful. The major producing conditions and results are set forth in Table 3 below.

Comparative Example 4

Here, 2.2 mol of maleic anhydride, 2.0 mol of dicyclopentadiene, and 2.0 mol of water are charged to a reaction vessel of the same type as the one used in Example 1 above. Then, the content is let undergo reaction with stirring under a nitrogen gas atmosphere at temperatures ranging from 100°C to 125°C, while an acid value of the reaction product is measured occasionally. When the acid value reaches 260mgKOH/g-265mgKOH/g, 9.8 mol of maleic anhydride, 11.0 mol of propylene glycol, and 1.1 mol of trimethylol propane are mixed with the reaction product, after which the resulting mixture is let undergo reaction for 7.5 hours at 200°C with stirring under a nitrogen gas atmosphere.

Consequently, comparative unsaturated polyester is obtained. An acid value of the comparative unsaturated

polyester is 26.0mgKOH/g. In the present comparative example, a preferable number X of moles of dicyclopentadiene with respect to 1 mol of carboxyl groups in the maleic anhydride is in a range between 0.1 mol and 0.5 mol inclusive. Here, the number X of moles set under the above reaction conditions is 0.08, which is out of the preferable range.

Then, after a predetermined amount of styrene is added to the comparative unsaturated polyester, hydroquinone is added in such an amount to attain a concentration of 100ppm with respect to a total amount, and the reaction product is mixed homogeneously. Consequently, a resin compound (UP-4) made of 60% of solid and 40% of styrene is prepared. The major reaction conditions and result are set forth in Table 1 below.

Then, a compound is obtained using 70.0 parts of the resin composition (UP-4) in the same manner as Example 1 above. Then, the resulting compound is made into a sheet in the same manner as Example 1, whereby a comparative SMC is produced. A ratio of the glass fibers contained in the comparative SMC is 20%.

A comparative plate is produced by subjecting the comparative SMC to the heat compression molding under the same molding conditions as Example 1 above. The coloring property and gloss of the plate thus obtained are evaluated in the same manner as Example 1 above. Then, no inconsistencies in color are acknowledged on the plate, but the plate has substantially no gloss on its surface, in other words, its outward appearance is not beautiful. The major producing conditions and results are set forth in Table 3 below.

Table 1

| | RESIN COMPOSITION | | | |
|---|---|---|---|---|
| | UP-1 | UP-2 | UP-3 | UP-4 |
| MALEIC ANHYDRIDE (mole) | 4.0 | 2.6 | 5.0 | 12.0 |
| DICYCLOPENTADIENE (mole) | 2.0 | 2.0 | 2.0 | 2.0 |
| WATER (mole) | 2.0 | 2.0 | 2.0 | 2.0 |
| PROPYLENE GLYCOL (mole) | 2.5 | 0.65 | 3.55 | 11.0 |
| TRIMETHYLOL PROPANE (mole) | 0.05 | 0.55 | --- | --- |
| NEOPENTYL GLYCOL (mole) | 0.5 | --- | 0.5 | 1.1 |
| PREFERRED RANGE FOR THE NUMBER X OF MOLES | 0.1-0.5 | 0.1-0.5 | 0.1-0.5 | 0.1-0.5 |
| SET NUMBER X OF MOLES | 0.25 | 0.38 | 0.20 | 0.08 |
| ACID VALUE (mgKOH/g) | 25.5 | 26.0 | 27.0 | 26.0 |
| STYRENE (%) | 40 | 40 | 40 | 40 |

Table 2

| | | EXAMPLE 1 | EXAMPLE 2 | EXAMPLE 3 | EXAMPLE 4 | EXAMPLE 5 | EXAMPLE 6 |
|---|---|---|---|---|---|---|---|
| RESIN COMPOSITION (PARTS) | | UP-1 70.0 | UP-1 70.0 | UP-1 70.0 | UP-1 70.0 | UP-1 70.0 | UP-2 70.0 |
| MAGNESIUM OXIDE (PART) | | 1.0 | 1.0 | 1.0 | 1.0 | 1.0 | 1.0 |
| PEROXY ESTER (PART) | | t-HPB 1.0 | t-APB 1.0 | t-HIPC 1.0 | t-APMH 1.0 | t-HPMH 1.0 | t-HPB 1.0 |
| CALCIUM CARBONATE (PARTS) | | 150.0 | 150.0 | 150.0 | 150.0 | 150.0 | 150.0 |
| POLYSTYRENE SOLUTION (PARTS) | | 30.0 | 30.0 | 30.0 | 30.0 | 30.0 | 30.0 |
| POLYETHYLENE POWDERS (PARTS) | | 5.0 | 5.0 | 5.0 | 5.0 | 5.0 | 5.0 |
| COLORING AGENT (PARTS) | | 5.0 | 5.0 | 5.0 | 5.0 | 5.0 | 5.0 |
| 1,4-BENZOQUINONE (PART) | | 0.05 | 0.05 | 0.05 | 0.05 | 0.05 | 0.05 |
| ZINC STEARATE (PARTS) | | 5.0 | 5.0 | 5.0 | 5.0 | 5.0 | 5.0 |
| GLASS FIBERS (%) | | 20 | 20 | 20 | 20 | 20 | 20 |
| OUTWARD APPEARANCE OF MOLDED ARTICLE | GLOSS | ◎ | ◎ | ○ | ○ | ○ | ◎ |
| | INCONSISTENCIES IN COLOR | ◎ | ◎ | ◎ | ◎ | ◎ | ◎ |

t-HPB : t-hexylperoxy benzoate
t-APB : t-amylperoxy benzoate
t-HIPC: t-hexylperoxy monoisopropyl carbonate
t-APMH: t-amylperoxy-3,5,5-trimethyl hexanoate
t-HPMH: t-hexylperoxy-3,5,5,-trimethyl hexanoate

Table 3

| | | EXAMPLE 7 | EXAMPLE 8 | COMPARATIVE EXAMPLE 1 | COMPARATIVE EXAMPLE 2 | COMPARATIVE EXAMPLE 3 | COMPARATIVE EXAMPLE 4 |
|---|---|---|---|---|---|---|---|
| RESIN COMPOSITION (PARTS) | | UP-3 70.0 | UP-1 70.0 | UP-1 70.0 | UP-1 70.0 | UP-1 70.0 | UP-4 70.0 |
| MAGNESIUM OXIDE (PART) | | 1.5 | 1.0 | 1.0 | 1.0 | 1.0 | 1.0 |
| PEROXY ESTER (PART) | | t-HPB 1.0 | t-HPB 0.5 t-BIPC 0.5 | t-BIPC 1.0 | t-BPB 1.0 | t-BPL 1.0 | t-HPB 1.0 |
| CALCIUM CARBONATE (PARTS) | | 150.0 | 150.0 | 150.0 | 150.0 | 150.0 | 150.0 |
| POLYSTYRENE SOLUTION (PARTS) | | 30.0 | 30.0 | 30.0 | 30.0 | 30.0 | 30.0 |
| POLYETHYLENE POWDERS (PARTS) | | 5.0 | 5.0 | 5.0 | 5.0 | 5.0 | 5.0 |
| COLORING AGENT (PARTS) | | 5.0 | 5.0 | 5.0 | 5.0 | 5.0 | 5.0 |
| 1,4-BENZOQUINONE (PART) | | 0.05 | 0.05 | 0.05 | 0.05 | 0.05 | 0.05 |
| ZINC STEARATE (PARTS) | | 5.0 | 5.0 | 5.0 | 5.0 | 5.0 | 5.0 |
| GLASS FIBERS (%) | | 20 | 20 | 20 | 20 | 20 | 20 |
| OUTWARD APPEARANCE OF MOLDED ARTICLE | GLOSS | ◎ | ◎ | X | △ | X | ◎ |
| | INCONSISTENCIES IN COLOR | O | ◎ | ◎ | ◎ | ◎ | X |

t-HPB: t-hexylperoxy benzoate
t-BPB: t-butylperoxy benzoate
b-BIPC: t-butylperoxy monoisopropyl carbonate
t-BPL: t-butylperoxy laurate

The invention being thus described, it will be obvious that the same may be varied in many ways. Such variations are not to be regarded as a departure from the spirit and scope of the invention, and all such modifications as

would be obvious to one skilled in the art are intended to be included within the scope of the following claims.

**Claims**

1. A molding material being unsaturated polyester produced using dicyclopentadiene,

   characterized in that, let $A_i$ (i=1, 2, • • •, n, where n is a natural number) be one particular polybasic acid in all of polybasic acid components to be made into the unsaturated polyester, $m_i$ be a mole fraction of the polybasic acid denoted as $A_i$ in all of the polybasic acid components, $N_i$ be the number of carboxyl groups contained in one molecule of the polybasic acid denoted as $A_i$ (here, $N_i$ is an integer greater than one, and in case of an anhydrous acid, the number $N_i$ is counted on the assumption that the anhydrous acid is converted into a hydrous acid), and X be the number of moles of dicyclopentadiene, then the number X of moles of dicyclopentadiene with respect to 1 mol of carboxyl groups in all the polybasic acid components satisfies Inequality (1) :

   $$0.2/\sum_{i=1}^{n}(N_i \times m_i) \leq x \leq [\sum_{i=1}^{n}(N_i \times m_i)-1]/\sum_{i=1}^{n}(N_i \times m_i) \;.....(1)$$

   where

   $$\sum_{i=1}^{n} m_i = 1 \,,$$

   and

   characterized by containing peroxy ester, in which a tertiary alkyl group having more than 4 carbon atoms bonds to a peroxide group.

2. The molding material of Claim 1, wherein said peroxy ester is peroxy benzoate.